# EUROPEAN PATENT SPECIFICATION

(11) **EP 3 974 590 B1**
(45) Date of publication and mention of the grant of the patent: **30.10.2024**
(21) Application number: 21197994.3
(22) Date of filing: 21.09.2021
(51) Int. Cl.: E03C 1/04, F16B 43/00, F16B 43/02, F16K 31/60

(54) **LEVER FAUCET VALVE AND SANITARY LEVER FAUCET**
EIN EINHEBELMISCHBATTERIEVENTIL UND EINE SANITÄRE EINHEBELMISCHBATTERIE
UNE SOUPAPE DE ROBINET À LEVIER ET UNE ROBINET SANITAIRE À LEVIER

(30) Priority: 24.09.2020 DE 102020124930
(43) Date of publication of application: 30.03.2022
(73) Proprietor: ORAS OY, 26100 Rauma (FI)
(72) Inventor: Icking, Thomas, 26510 Rauma (FI)
(74) Representative: Ostertag & Partner Patentanwälte mbB

(56) References cited:
- EP-A2- 0 136 211
- DE-A1- 102011 008 349
- GB-A- 2 524 109
- KR-A- 19980 086 534
- US-A- 5 700 121
- US-A- 5 992 457
- US-A1- 2017 030 056
- US-B2- 7 219 696

## Description

### BACKGROUND OF THE INVENTION

### 1. Field of the invention

The invention concerns a lever faucet valve, in particular a lever faucet cartridge, in particular a single-lever faucet mixing cartridge, being configured to be inserted into a sanitary lever faucet, in particular into a sanitary single-lever mixing faucet, for controlling the dosage and/or the temperature of water, according to the preamble of Claim 1.

Furthermore, the invention concerns a sanitary lever faucet, in particular a sanitary single-lever mixing faucet.

### 2. Description of the state of the art

Sanitary lever faucets are currently the most widely used sanitary faucets and are installed in sanitary installations, for example, on washbasins and sinks in kitchens and bathrooms, showers, bidets and occasionally on toilets, too.

Most of these sanitary lever faucets installed in this way have no flow limitation. Usually, a lever of the sanitary lever faucet, by means of which a valve element of a lever faucet valve may be moved, may be switched in a continuous manner from a closing position to a maximum possible opening position in which the valve element enters a position in which a water passageway is in a fully released state. This in turn leads to a maximum possible volume flow at a water outlet of the sanitary lever faucet.

However, for some time now, especially for places like hospitals where a large number of such sanitary lever faucets are installed, it has been a desire, both for the sake of the environment and to save energy and water costs, to reduce the water consumption of such sanitary lever faucets. This desire is based on the knowledge that e.g. for the thorough washing of hands often less water is sufficient than what is discharged at the maximum possible flow rate. However, users of such sanitary lever faucets tend to always move the levers of the sanitary lever faucets to their maximum possible opening position.

Therefore, from the state of the art, a stop mechanism is known which limits an opening angle of a pivotable spindle of the lever faucet valve by means of which the valve element is moved. Through this stop mechanism, the water passageway may only be partially released by the valve element.

Usually, this stop mechanism makes use of a grub screw which is arranged in a threaded through-bore extending perpendicular to a longitudinal axis of the spindle. The position of this grub screw with respect to the spindle can be changed along a bore axis with the aid of a tool such as an allen wrench. On a side of the grub screw with which it should limit the opening angle of the lever, i.e. the lever stroke, it has a stop in the form of a stop surface. This stop surface of the grub screw points towards the rear side of the lever faucet and limits the opening angle of the spindle of the lever faucet valve, i.e. also of an opening angle of the lever of the lever faucet, by abutting against a main body of the lever faucet valve or a housing section of the lever faucet when reaching a certain opening angle of the spindle.

The maximum possible opening angle of the spindle can consequently be changed by screwing the grub screw more or less into the spindle.

A disadvantage of this, however, is that the threaded through-bore destabilizes the spindle structurally too much, especially with respect to increasingly smaller spindles for increasingly filigree lever faucets. As a result, especially relatively small spindles with such a threaded through-bore can no longer meet the requirements for long service life and sufficiently high load force capacity.

A further disadvantage of the grub screw known from the state of the art is that the maximum opening angle of the spindle and the lever, and thus the maximum flow rate that can be delivered, can only be adjusted imprecisely due to the continuous thread of the grub screw. If all opening angle limits are to be set exactly the same, it is - for the lever faucets known from the state of the art - necessary to count the number of turns of the grub screw in the threaded through-bore, which is cumbersome and takes a lot of time. Especially in the above-mentioned places, where a large number of such lever faucets are installed, it is desirable that the maximum opening angle of all lever faucets can be set in the same manner in a particularly simple and quick way.

Solutions to this problem of inaccuracy in grub screws are already known from the prior art. For example, KR 1998-086534 describes a solution for an adjusting element which can overcome the problem described above.

Other adjusting elements for sanitary lever faucets, but each fulfilling a different function, are described in US 2017/0030056 A1, GB 2524109 A, US 7,219,696 B2 and US 5,992,457.

### SUMMARY OF THE INVENTION

It is therefore an object of the invention to provide a lever faucet valve and a sanitary lever faucet of the kind mentioned in the outset which are improved compared to the known grub screw stop mechanism and which in particular address the disadvantages of the prior art as discussed above.

In the case of a lever faucet valve of the kind mentioned in the outset, this object is solved by the features of the characterizing portion of Claim 1.

In other words, the adjusting member comprises - besides the positioning structure - two individual stops that may be set individually and that interact with, i.e. abut against, either the pivotable spindle or, in kinematic reversal, the main body of the lever faucet valve in such a way as each of the two stops may block the pivoting movement of the spindle and therefore may limit the opening angle γ of the spindle individually. The respective opening angle γ of the spindle is thus defined by the respective stop - this interaction is referred to by the term "flow limitation stage".

According to the invention, it was recognized that with discrete flow limitation stages, i.e. flow limitation stages that may be incrementally adjusted, on one hand, the same opening angles γ may be particularly quickly and easily adjusted throughout all the lever faucets which are in use and, on the other hand, the opening angles γ may be changed just as quickly and easily just by changing the flow limitation stage of the adjusting member. In addition, the adjusting member according to the invention does not need a threaded through-bore through the spindle anymore.

The term "positioning" is used here as a generic term to generally address the spatial coordinates of the adjusting member with respect to the lever faucet valve, i.e. its absolute position in relation to the lever faucet valve as well as its orientation with respect to the same. In contrast thereto, the term "orientation" is used to especially address the alignment of the main axis of the adjusting member with respect to a longitudinal axis of the lever faucet valve and/or the relative position of a fixed reference point along an imaginary circular line around the longitudinal axis of the lever faucet valve. It may well be possible that the absolute position, i.e. the X-, Y- and Z-coordinates of a center point of the adjusting element, remains the same with respect to the longitudinal axis of the lever faucet valve, while the relative orientation, i.e. the angle between the main axis of the adjusting element and the longitudinal axis of the lever faucet valve and/or the relative position of the fixed reference point along the imaginary circular line around said longitudinal axis change.

In other words, the adjusting element comprises at least two stops at different positions which cause a different limiting of the maximum opening angle of the spindle by positioning either the one or the other stop into the operating range of the spindle. In particular, the stops may be arranged on different longitudinal heights of the adjusting element.

Preferably, the stops each comprise a stop surface inclined by an inclination angle α with respect to the main axis of the adjusting member, wherein the inclination angles α of the stop surfaces are different from one another. Preferably, the stop surfaces are inclined in such a way that, when the adjustment member is positioned with respect to the spindle or the main body and when the spindle is being pivoted such that the respective stop surface of the adjusting member is in abutment with a counterstop surface of - exemplarily spoken - the main body or another part of the lever faucet valve, the stop surface extends parallel to this counterstop surface. It is also well conceivable that the adjusting member simultaneously performs the same movement around a pivoting axis of the spindle when the spindle is being pivoted. Besides that, it is also conceivable that - in the manner of a kinematic reversal - the adjusting member does not perform any movement when the spindle is being pivoted and merely limits a pivoting path, i.e. the opening angle γ, of the spindle. In accordance with this, either the stop surfaces of the adjusting member may abut against a part of the lever faucet valve, e.g. the main body, or the spindle may abut against the stop surfaces of the adjusting member.

Advantageously, the adjusting member comprises at least three or at least four individual stops each with an individual stop surface, wherein, in particular, each stop surface defines an individual opening angle γ of the spindle. With an adjusting member formed like this, more flow limitation stages are formed and can be used to set given maximum water flow settings by individually and discretely limiting the opening angle γ of the spindle, when the adjusting member is positioned with respect to the spindle or the main body.

A preferred form of the invention provides for an inclination angle α lying in an angle range from 5° to 50°, in particular from 7.5° to 35° or from 10° to 25°. It is then advantageous, when a first stop surface is inclined by a first inclination angle α₁ lying in a first angle range from 22.5° to 50°, in particular 25° to 35°, and a second stop surface is inclined by a second inclination angle α₂ lying in a second angle range from 5° to 22.5°, in particular 17.5° to 22.5°. Furthermore, when the adjustment member comprises more than two stop surfaces, it is advantageous when a third stop surface is inclined by a third inclination angle α₃ lying in a third angle range from 5° to 17.5°, in particular 12.5° to 17.5°. In addition, a fourth stop surface may be advantageously inclined by a fourth inclination angle α₄ lying in a fourth angle range from 5° to 12.5°, in particular 10° to 12.5°.

A further advantageous form of the invention provides that, when the adjusting member is positioned with respect to the spindle or the main body, the flow limitation stage may be changed by rotating the adjusting member, in particular by rotating the adjusting member around its main axis. For example, when a lever of the sanitary lever faucet has been disassembled, it is sufficient to rotate the adjusting member, in particular to rotate the adjusting member around its main axis, at its position with respect to the spindle or the main body to change the flow limitation stage and thus the opening angle γ of the spindle. It is thus also conceivable to, when the adjusting member is for example attached to the spindle or the main body, first detach the adjusting member, then to rotate it and finally to attach it again in a new positioning, in particular a new orientation. Such a simple, step-by-step adjustment is particularly advantageous in larger facilities where it is important to set the same maximum volume flow rate per time for all the sanitary lever faucets installed. Such facilities include hospitals, shopping malls, public toilets, larger offices, vacation resorts, and so on.

Advantageously, the adjusting member is formed in such a way that by means of the adjusting member, the maximum water flow setting of the lever faucet valve may be adjusted toollessly. With an adjusting member of that kind, a long cherished wish for a comparatively easier adjustment of the maximum water flow setting is thus fulfilled.

The term "toollessly" is used here to mean that the flow limitation stages may only be adjusted by hand without tools such as screwdrivers, Allen keys, pliers or similar. It is obvious that - with a bit of fine motor skills - also a screw may be screwed into a threaded hole using a thumb nail, for example. In case of the screw, however, at some point, too much screwdriving force has to be applied, wherein reaching that point, the thumb nail is not sufficient anymore and a screwdriver is needed to either fully tighten the screw or to screw the screw beyond a point not reachable anymore by the thumb nail. The major difference here between such a screw and the core meaning of "toollessly" is, that no fine motor skills and/or no strong force application at all are required to change the flow limitation stage. In other words, "toollessly" expresses "designed to be used without tools", which is to be seen in contrast to "designed for tool-based using but nonetheless usable without tools within certain limits".

According to the invention, the adjusting member comprises a base body, wherein the base body comprises a first end and a second end opposite the first end, wherein the main axis extends between the first end and the second end, and wherein the base body comprises a circumferential portion formed around the main axis. In a preferred form of the adjusting member its base body is substantially U-shaped or ring-shaped. Favourably, the positioning structure comprises a positioning opening formed in the circumferential portion configured to receive a portion of the lever faucet valve, wherein this portion may be a respective portion of the main body of the lever faucet valve. Preferably, however, this portion is an attachment portion of the spindle.

In addition, according to the invention, the positioning structure comprises an inner circumferential surface of the circumferential portion, wherein the inner circumferential surface is configured such as to be complementary to the attachment portion of the spindle of the lever faucet valve.

According to the invention the inner circumferential surface furthermore is configured such as to be complementary to an attachment portion of the spindle.

In addition to that, according to the invention the positioning structure is formed as a snap-fit means by means of which the adjusting member is attached toollessly to the attachment portion of the spindle in at least two positions, in particular in at least two orientations. Then, the adjustment member is snap-fitted to the attachment portion of the spindle. In practice, when - for example - the maximum water flow setting of a sanitary lever faucet has to be changed, a lever, being a part of a housing of the sanitary lever faucet and being pivotably connected to the spindle, with which the opening angle γ of the spindle may be changed, first has to be disassembled from a remaining housing portion of the housing of the sanitary lever faucet. After disassembling, the adjusting member is then attached by snap-fitting to the spindle without using any tools, just by using the hand and applying a small amount of force.

In order to further facilitate the toolless adjustment of the flow limitation stage, it is advantageous when the circumferential portion comprises an outer circumferential surface at which operating structures are formed by means of which, when the adjusting member is positioned with respect to the spindle or the main body, the flow limitation stage may be changed. By means of such operating structures, it is comparatively easier to grab the adjusting member and to rotate it around its main axis.

In order to immediately recognize which flow limitation stage is currently set, when the adjusting element is positioned with respect to the spindle or the main body, it is preferred when the adjusting member comprises markers indicating the respective flow limitation stage. Particularly when the adjusting element is U-shaped or ring-shaped, it is then advantageous when the markers are arranged, in particular at substantially equal distances from each other, along the circumferential portion in direct relationship with the respective stop surfaces.

It is particularly advantageous when at least some of the markers are formed by the operating structures. This is, on one hand, visually appealing because it is not necessarily expected that the markers are formed by the operating structures, and, on the other hand, practical, because this makes particularly good use of the spatially limited outer circumferential surface.

Preferably, the adjusting member is formed in one piece. It is conceivable that the adjusting member is configured such as to be able to be produced with a casting, injection moulding or 3D-printing process.

It is therefore advantageous, when the adjusting member comprises at least one of the group of the following materials: a plastic, in particular a thermoset or a thermoplastic, able to be injection moulded or 3D-printed, a metal or a metal alloy able to be casted, injection moulded or 3D-printed, or a ceramic material able to be casted or injection moulded.

The lever faucet valve preferably comprises, inter alia, at least one water inlet for introducing water into the lever faucet valve, a water outlet for releasing water from the lever faucet valve, a water passageway formed between the water inlet and the water outlet, and a valve element for altering the flow cross section of the water passageway continuously or discrete from a state where the flow cross section is zero to a state where the flow cross section is fully released.

The spindle is - in the present case - understood as being pivotable around a pivoting axis, namely for controlling a maximum water flow able to flow through the lever faucet valve and thus leaving a water outlet of a sanitary lever faucet - as far as the lever faucet valve is used in such a sanitary lever faucet. In addition, the spindle may also be rotatable around a rotating axis perpendicular to the pivoting axis, namely for controlling the temperature of the water leaving the water outlet of the sanitary lever faucet. In such a case, the lever faucet valve is being understood as a lever faucet mixing cartridge and the corresponding sanitary lever faucet is understood as being a sanitary single-lever mixing faucet. This also applies to the suitability of the adjusting member of being usable with such cartridges.

Preferably, the adjusting member is positioned with respect to, in particular attached to, the spindle in such a way that the at least two individual stops point towards the main body. In this case, as was already mentioned above, the adjusting member may simultaneously perform the same pivoting movement as the spindle. The respective stop of the currently set flow limitation stage of the adjusting member may then abut against the main body of the lever faucet valve and therefore limit the maximum opening angle γ of the spindle. In kinematic reversal, it is thus also conceivable that the adjusting member is positioned with respect to, in particular attached to, the main body. In this case, the spindle may then abut against the stop of the currently set flow limitation stage, whereby the opening angle γ of the spindle is limited. In the latter case, the stops of the adjusting member point away from the main body.

A further advantageous form of the invention provides that, in particular before, during and after the pivoting movement of the spindle, the main axis of the adjusting member extends along a longitudinal axis of the spindle.

Also, the above-mentioned object is solved in the case of a sanitary lever faucet, in particular a sanitary single-lever mixing faucet, in that it comprises a lever faucet valve with some or all of the features mentioned above regarding the lever faucet valve according to the invention.

A method for producing an adjusting member with one or all of the features mentioned above may comprise the following steps:
a) providing a mould for casting or injection moulding the adjusting member and raw material supposed to be casted or injection moulded or providing a 3D-printing device and a digital 3D-model of the adjusting member stored on a storage device;
b) casting, injection moulding or 3D-printing the adjusting member.

A template may comprise a mould or a storage device on which the digital 3D-model of the adjusting element is stored.

### SHORT DESCRIPTION OF THE DRAWINGS

Exemplary embodiments of the invention will be described in more detail with respect to the drawings. In these show:
- Figures 1 and 2: perspective views of a lever faucet valve according to the invention, wherein there is illustrated how an adjusting member may be attached to a pivotable spindle of the lever faucet valve;
- Figures 3 and 4: side views of the lever faucet valve according to figure 1, wherein in these figures, the adjusting member is attached in two different orientations to the spindle resulting in two different maximum opening angles γ of the same;
- Figures 5 and 6: perspective views of a first exemplary embodiment of the adjusting member, wherein figure 5 shows a perspective top view and figure 6 shows a perspective bottom view of the adjusting member;
- Figure 7: a top view of the first exemplary embodiment of the adjusting member;
- Figures 8 and 9: side views of the first exemplary embodiment of the adjusting member, wherein figure 8 shows a rear side view and figure 9 shows a right side view as indicated in figure 7;
- Figure 10: a rear side perspective view of a second exemplary embodiment of the adjusting member.

### DESCRIPTION OF PREFERRED EXEMPLARY EMBODIMENTS

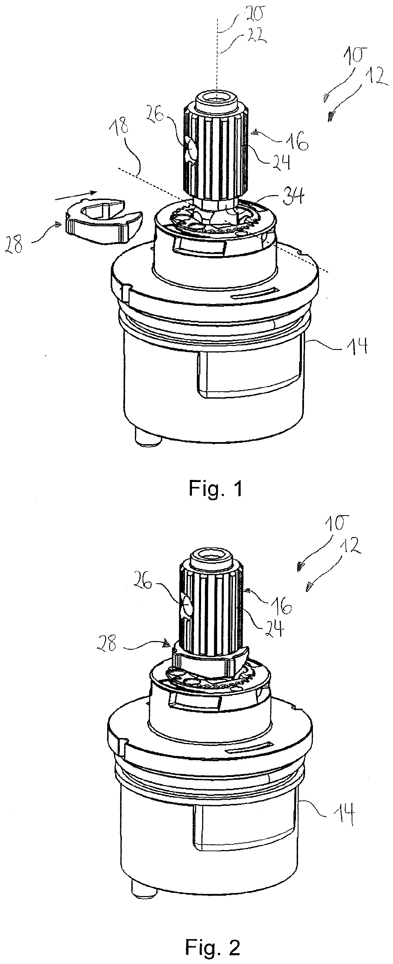

The figures 1 and 2 schematically illustrate a lever faucet valve designated in total as 10 for controlling the dosage of water. Here, the lever faucet valve 10 is exemplarily realized as a single-lever faucet mixing cartridge 12. With such a single-lever faucet mixing cartridge 12, two water streams, one with a cold water temperature and one with a hot water temperature, may be mixed so as to get a single mixed water stream with a mixed water temperature. For the sake of simplicity, the following will continue to refer to a single-lever faucet mixing cartridge 12. Nonetheless, it should be obvious that all following remarks - with the exception of mixing two water streams in general and structural realizations for mixing two water streams - also apply to a lever faucet valve 10 in general.

The single-lever faucet mixing cartridge 12 therefore comprises a main body 14 and, what is not visible, two water inlets and a water outlet. Between the water inlets and the water outlet an also not visible water passageway with a cold water channel, a hot water channel and a mixed water channel is formed, such that the cold and the hot water stream may enter the single-lever faucet mixing cartridge 12 through the water inlets and may pass through the water passageway until they get mixed to the mixed water stream and finally discharged through the water outlet.

The water passageway comprises a valve element with which a flow cross section may be changed such that a volume flow of the water may be changed from "no flow" to "full flow" in a continuous manner. Here, this valve element is exemplarily formed as a valve plate arranged at a bottom side of the single-lever faucet mixing cartridge 12 and therefore not visible. The valve plate interacts with a stationary valve disc. With both the valve plate and the valve disc, both the mixing ratio of the cold water stream and the hot water stream and the volume flow of the mixed water stream may be adjusted. The respective mixing ratio or the volume flow at the water outlet of the lever faucet mixing cartridge is determined by the respective orientation of the valve plate with respect to the valve disc. The valve disc therefore comprises at least three holes, wherein a first of those holes is connected with the cold water channel, a second hole is connected to the hot water channel and a third hole is connected to the mixed water channel. The valve plate comprises a mixing chamber which is arranged between the hot and cold water channels as well as the mixed water channel the cold and hot water streams may be mixed to the mixed water stream.

In order to control the orientation of the valve plate with respect to the valve disc, the single-lever faucet mixing cartridge 12 comprises a pivotable spindle 16 which is movably connected with the valve plate and with which the valve plate may be moved and changed in its orientation. Accordingly, in general, in a lever faucet valve 10, the pivotable spindle 16 is movably connected to the valve element which is configured to control the volume flow of a single water stream.

Here, the spindle 16 is pivotable around a pivoting axis 18 extending perpendicular to a longitudinal axis 20 of the main body 14. In addition, the spindle 16 is rotatable around a rotating axis 22 extending parallel to the longitudinal axis 20 of the main body 14. By pivoting the spindle 16 around the pivoting axis 18 about an opening angle γ it is possible to set a water flow setting at which a given volume flow at the water outlet of the single-lever faucet mixing cartridge 12 may be set. By rotating the spindle 16 around the rotating axis 22 the mixing ratio of the cold and hot water streams may be set. In conclusion, the spindle 16 serves as a control element for the user of a sanitary lever faucet.

Usually, single-lever faucet mixing cartridges 12 are inserted into a main housing portion of a housing of the sanitary lever faucet. Then, a lever, which is to be seen as a further housing portion of the sanitary lever faucet, is placed on the spindle 16 and serves as a user operating member for operating the spindle 16 of the single-lever faucet cartridge 12 and thus the valve element, at present the valve plate. To ensure that the lever is firmly seated on the spindle 16 and to prevent the lever from slipping relative to the spindle 16 in a rotation direction around the rotation axis 22 when the lever is rotated, the spindle 16 has locking lamellas 24 that are parallel to the longitudinal axis 20 of the main body 14 and thus to the rotation axis 22 of the spindle 16.

Furthermore, the spindle 16 also has a central hole 26, by means of which the lever can be attached to the spindle 16 via a mounting element such as a screw.

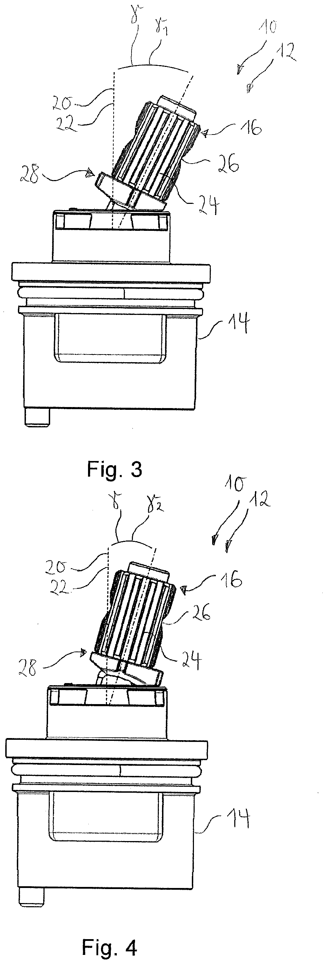

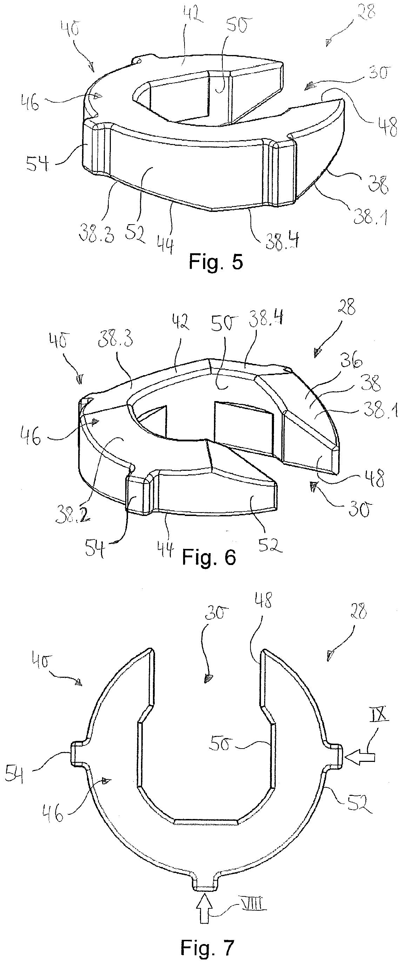

The single-lever faucet mixing cartridge 12 now comprises an adjusting member 28 for adjusting a maximum water flow setting of the single-lever faucet mixing cartridge 12, wherein in figures 1 to 9 a first exemplary embodiment of the adjusting member 28 is shown. By means of the adjusting member 28, different flow limitation stages - not specifically carrying reference signs - may be set, wherein each of those sets a given maximum water flow setting by limiting the opening angle γ of the spindle 16. In figures 3 and 4, there are shown two different maximum opening angles γ₁ and γ₂ caused by two different flow limitation stages of the adjusting member 28.

Therefore, the adjusting member 28 comprises a positioning structure 30 and a main axis 32. By means of the positioning structure 30 the adjusting member 28 may be positioned with respect to, here exemplarily attached to, the spindle 16 of the single-lever faucet mixing cartridge 12. The adjusting member 28 may be attached to an attachment portion 34 of the spindle 16, as is shown in figures 1 and 2.

Now with reference to figures 3 to 6 as well as 8 and 9, the adjusting member 28 comprises, in order to define the given flow limitation stages, at least two, in this exemplary embodiment four, stops 36. The stops 36 each comprise a stop surface 38 inclined by an inclination angle α with respect to the main axis 32 of the adjusting member 28. Those inclination angles α are different from one another so as to be able to define different flow limitation stages when positioned with respect to - here attached to the attachment portion 34 of - the spindle 16.

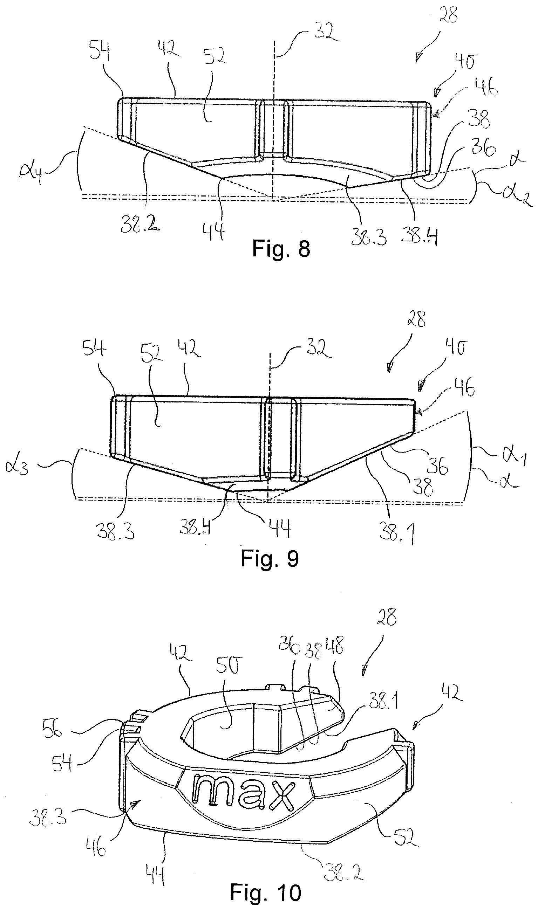

In this concrete exemplary embodiment of the adjusting member 28 and also in a second exemplary embodiment of the adjusting member 28 shown in figure 10, a first stop surface 38.1 is inclined by an inclination angle α₁ of 25°, a second stop surface 38.2 is inclined by an angle α₂ of 20°, a third stop surface 38.3 is inclined by an angle α₃ of 15° and a fourth stop surface 38.4 is inclined by an angle α₄ of 10°. In exemplary embodiments not explicitly shown the inclination angles α may of course vary with respect to those of the present exemplary embodiment. The inclination angles α were numbered according to their angle value.

As can be seen from figures 3 and 4, by rotating the adjusting member 28 around its main axis 32 the flow limitation stage may be changed. When the adjusting member 28 is rotated around its main axis 32, another stop surface 38 is brought into position such that this other stop surface 38 at some earlier or later point abuts against the main body 14, when the spindle 16 is pivoted. Due to the respective inclinations of the stop surfaces 38.1, 38.2, 38.3, 38.4 the pivoting movement of the spindle 16 ends, as already mentioned, earlier or later, depending on the stop surface 38 which is currently set as flow limitation stage and thus depending on the inclination angle α. Therethrough, the maximum opening angle γ of the spindle 16 may be limited incrementally.

Structurally, the adjusting member 28 comprises a base body 40 with a first end 42 and a second end 44 opposite the first end 42 which is presently, of course only exemplarily, U-shaped. The main axis 32 extends from the first end 42 to the second end 44. Furthermore, the base body 40 comprises a circumferential portion 46 which is formed around the main axis 32 of the adjusting member 28.

The positioning structure 30, with which the adjusting member 28 may be attached to the attachment portion 34 of the spindle 16, comprises a positioning opening 48 which in the two present exemplary embodiments forms the opening of the "U" of the substantially U-shaped base body 40. With this positioning opening 48 the adjusting member may be clipped at the attachment portion 34 of the spindle 16. Insofar, the positioning structure 30 is presently formed as a snap-fit means which does not carry a specific reference sign by means of which the adjusting member 28 may be attached toollessly to the attachment portion 34 of the spindle 16 in four different positions.

The positioning structure 30 further comprises an inner circumferential surface 50 of the circumferential portion 46. Here, this circumferential portion 46 is formed complementary to the attachment portion 34 of the spindle 16. Exemplarily, the attachment portion 34 has an octagonal configuration, wherein the inner circumferential surface 50 has a corresponding inner octagonal configuration which is slightly larger than the octagonal configuration of the attachment portion 34. Also, the inner octagonal configuration of the inner circumferential surface 50 is designed such as to be rotatable with respect to the attachment portion 34 by applying a comparatively low to medium rotating force to the adjusting member 28. For rotating the adjusting member 28 around the attachment portion 34, an initial force has to be overcome. After overcoming this initial force the adjusting member 28 snaps into a new relative radial position or orientation, whereby a new flow limitation stage is set.

Furthermore, the circumferential portion 46 comprises an outer circumferential surface 52 at which operating structures 54 are formed. These operating structures 54 presently serve as handles for the user of the adjusting member 28. By applying a rotation force on the operating structures 54 with a hand of the user, the adjusting member 28 may be rotated and therefore also the flow limitation stage may be changed.

As can be seen in figure 10 showing a second exemplary embodiment of the adjusting member 28, the adjusting member 28 according to the second exemplary embodiment comprises markers 56 indicating the respective flow limitation stage set by the associated stop surface 38.1 to 38.4. Here, these markers 56 are exemplarily formed by the operating structures 54.

## Claims

1. A lever faucet valve, in particular a valve cartridge (12), for controlling the dosage of water, comprising
a) a main body (14),
b) a spindle (16) being pivotable with respect to the main body (14) about an opening angle (γ), wherein by means of pivoting the spindle (16) the opening state of the lever faucet valve (10) may be controlled,
c) an adjusting member (28) for adjusting a maximum water flow setting of the lever faucet valve (10), comprising
- a positioning structure (30) and a main axis (32), wherein by means of the positioning structure (30) the adjusting member (28) may be positioned with respect to the pivotable spindle (16) or the main body (14) of the lever faucet valve (10),
- at least two individual stops (36), wherein each of the stops (36) is configured to define, when the adjusting member (28) is positioned with respect to the spindle (16) or the main body (14), depending on the positioning of the adjusting member (28), a given flow limitation stage,
- a base body (40), wherein the base body comprises a first end (42) and a second end (44) opposite the first end (42), wherein the main axis (32) extends from the first end (42) to the second end (44), wherein
- each flow limitation stage sets a given maximum water flow setting by limiting a maximum opening angle (γ) of the spindle (16), **characterized in that**
d) the base body (40) comprises a circumferential portion (46) formed around the main axis (32), wherein the positioning structure (30) comprises an inner circumferential surface (50) of the circumferential portion (46), wherein the inner circumferential surface (50) is configured such as to be complementary to an attachment portion (34) of the spindle (16),
e) the positioning structure (30) of the adjusting member (28) is formed as a snap-fit means by means of which the adjusting member (28) may be attached toollessly to the attachment portion (34) of the spindle (16) in at least two different positions.

2. The lever faucet valve according to Claim 1, **characterized in that** the stops (36) each comprise a stop surface (38; 38.1, 38.2, 38.3, 38.4) inclined by an inclination angle (∝) with respect to the main axis (32) of the adjusting member (28), wherein the inclination angles (∝) of the stop surfaces (38; 38.1, 38.2, 38.3, 38.4) are different from one another.

3. The lever faucet valve according to Claim 1 or 2, **characterized in that**, when the adjusting member (28) is positioned with respect to the spindle (16) or the main body (14), the flow limitation stage may be changed by rotating the adjusting member (28).

4. The lever faucet valve according to one of Claims 1 to 3, **characterized in that** the base body (40) is substantially U-shaped or ring-shaped.

5. The lever faucet valve according to one of Claims 1 to 4, **characterized in that** the positioning structure (30) comprises a positioning opening (48) formed in the circumferential portion (46) configured to receive a portion of the spindle (16).

6. The lever faucet valve according to one of Claims 1 to 5, **characterized in that** the circumferential portion (46) comprises an outer circumferential surface (52) at which operating structures (54) are formed by means of which, when the adjusting member (28) is positioned with respect to the spindle (16) or the main body (14), the flow limitation stage may be changed.

7. The lever faucet valve according to one of Claims 1 to 6, **characterized in that** the adjusting member (28) comprises markers (56) indicating, when the adjusting member (28) is positioned with respect to the spindle (16) or the main body (14), the respective flow limitation stage.

8. The lever faucet valve according to Claim 7, **characterized in that** at least some of the markers (56) are formed by the operating structures (54).

9. The lever faucet valve according to one of Claims 1 to 8, **characterized in that** the adjusting member (28) is positioned with respect to the spindle (16) in such a way that the stops (36) point towards the main body (14).

10. A sanitary lever faucet **characterized in that** it comprises a lever faucet valve (10) according to one of Claims 1 to 9.

## Patentansprüche

1. Ein Hebelhahnventil, insbesondere eine Ventilkartusche, zum Einstellen des Wasserdurchflusses, umfassend
a) einen Hauptkörper (14),
b) eine Spindel (16), die bezüglich des Hauptkörpers (14) um einen Öffnungswinkel (γ) verschwenkbar ist, wobei mittels Schwenken der Spindel (16) der Öffnungszustand des Hebelhahnventils (10) gesteuert werden kann,
c) ein Einstellelement (28) zum Einstellen einer Maximalwasserdurchfluss-Einstellung des Hebelhahnventils (10), umfassend
- eine Positionierstruktur (30) und eine Hauptachse (32), wobei das Einstellelement (28) mittels der Positionierstruktur (30) in Bezug auf die verschwenkbare Spindel (16) oder einen Hauptkörper (14) des Hebelhahnventils (10) positioniert werden kann,
- mindestens zwei individuelle Anschläge (36), wobei jeder der Anschläge (36) dazu ausgebildet ist, wenn das Einstellelement (28) in Bezug auf die Spindel (16) oder den Hauptkörper (14) positioniert ist, in Abhängigkeit von der Positionierung des Einstellelements (28) eine bestimmte Durchflussbegrenzungsstufe zu definieren,
- einen Grundkörper (40), wobei der Grundkörper ein erstes Ende (42) und ein dem ersten Ende (42) gegenüberliegendes zweites Ende (44) umfasst, wobei sich die Hauptachse (32) vom ersten Ende (42) zum zweiten Ende (44) erstreckt,
wobei
- jede Durchflussbegrenzungsstufe eine bestimmte Maximalwasserdurchfluss-Einstellung durch Begrenzung eines maximalen Öffnungswinkels (γ) der Spindel (16) einstellt,
**dadurch gekennzeichnet, dass**
d) der Grundkörper (40) einen um die Hauptachse (32) herum ausgebildeten Umfangsabschnitt (46) aufweist, wobei die Positionierstruktur (30) eine Innenumfangsfläche (50) des Umfangsabschnitts (46) umfasst, wobei die Innenumfangsfläche (50) so ausgebildet ist, dass sie komplementär zu einem Befestigungsabschnitt (34) der Spindel (16) ist,
e) die Positionierstruktur (30) des Einstellelements (28) als Schnappverbindungsmittel ausgebildet ist, mittels welchem das Einstellelement (28) in mindestens zwei verschiedenen Positionen werkzeuglos an dem Befestigungsabschnitt (34) der Spindel (16) befestigt werden kann.

2. Das Hebelhahnventil nach Anspruch 1, **dadurch gekennzeichnet, dass** die Anschläge (36) jeweils eine um einen Neigungswinkel (α) gegenüber der Hauptachse (32) des Einstellelements (28) geneigte Anschlagfläche (38; 38.1, 38.2, 38.3, 38.4) umfassen, wobei die Neigungswinkel (α) der Anschlagflächen (38; 38.1, 38.2, 38.3, 38.4) voneinander verschieden sind.

3. Das Hebelhahnventil nach Anspruch 1 oder 2, **dadurch gekennzeichnet, dass**, wenn das Einstellelement (28) in Bezug auf die Spindel (16) oder den Hauptkörper (14) positioniert ist, die Durchflussbegrenzungsstufe durch Drehen des Einstellelements (28) veränderbar ist.

4. Das Hebelhahnventil nach einem der Ansprüche 1 bis 3, **dadurch gekennzeichnet, dass** der Grundkörper (40) im Wesentlichen U-förmig oder ringförmig ist.

5. Das Hebelhahnventil nach einem der Ansprüche 1 bis 4, **dadurch gekennzeichnet, dass** die Positionierstruktur (30) eine im Umfangsabschnitt (46) ausgebildete Positionieröffnung (48) umfasst, die dazu ausgebildet ist, einen Abschnitt der Spindel (16) aufzunehmen.

6. Das Hebelhahnventil nach einem der Ansprüche 1 bis 5, **dadurch gekennzeichnet, dass** der Umfangsabschnitt (46) eine Außenumfangsfläche (52) umfasst, an der Bedienstrukturen (54) ausgebildet sind, mittels welchen, wenn das Einstellelement in Bezug auf die Spindel (16) oder den Hauptkörper (14) positioniert ist, die Durchflussbegrenzungsstufe verändert werden kann.

7. Das Hebelhahnventil nach einem der Ansprüche 1 bis 6, **dadurch gekennzeichnet, dass** das Einstellelement (28) Markierungen (56) umfasst, die, wenn das Einstellelement (28) in Bezug auf die Spindel (16) oder den Hauptkörper (14) positioniert ist, die jeweilige Durchflussbegrenzungsstufe anzeigen.

8. Das Hebelhahnventil nach Anspruch 7, **dadurch gekennzeichnet, dass** zumindest ein Teil der Markierungen (56) durch die Bedienstrukturen (54) ausgebildet wird.

9. Das Hebelhahnventil nach einem der Ansprüche 1 bis 8, **dadurch gekennzeichnet, dass** das Einstellelement (28) in Bezug auf die Spindel (16) so positioniert ist, dass die Anschläge (36) in Richtung des Hauptkörpers (14) zeigen.

10. Ein sanitärer Hebelhahn, **dadurch gekennzeichnet, dass** er ein Hebelhahnventil (10) nach einem der Ansprüche 1 bis 9 umfasst.

## Revendications

1. Soupape de robinet à levier, en particulier une cartouche de soupape (12), pour commander le dosage de l'eau, comprenant
a) un corps principal (14),
b) un arbre (16) pouvant pivoter par rapport au corps principal (14) autour d'un angle d'ouverture (γ),
dans laquelle, au moyen du pivotement de l'arbre (16), l'état d'ouverture de la soupape de robinet à levier (10) peut être commandé,
c) un élément de réglage (28) pour régler un paramètre de débit d'eau maximal de la soupape de robinet à levier (10), comprenant
- une structure de positionnement (30) et un axe principal (32), dans laquelle au moyen de la structure de positionnement (30), l'élément de réglage (28) peut être positionné par rapport à l'arbre pivotant (16) ou au corps principal (14) de la soupape de robinet à levier (10),
- au moins deux butées individuelles (36), dans laquelle chacune des butées (36) est configurée pour définir, lorsque l'élément de réglage (28) est positionné par rapport à l'arbre (16) ou au corps principal (14), en fonction du positionnement de l'élément de réglage (28), un étage de limitation de débit donné,
- un corps de base (40), dans laquelle le corps de base comprend une première extrémité (42) et une seconde extrémité (44) opposée à la première extrémité (42), dans laquelle l'axe principal (32) s'étend de la première extrémité (42) à la seconde extrémité (44), dans laquelle
- chaque étage de limitation de débit établit un paramètre de débit d'eau maximal donné en limitant un angle d'ouverture maximal (γ) de l'arbre (16),
**caractérisée en ce que**
d) le corps de base (40) comprend une portion circonférentielle (46) formée autour de l'axe principal (32), dans laquelle la structure de positionnement (30) comprend une surface circonférentielle intérieure (50) de la portion circonférentielle (46), dans laquelle la surface circonférentielle intérieure (50) est configurée de manière à être complémentaire à une portion de fixation (34) de l'arbre (16),
e) la structure de positionnement (30) de l'élément de réglage (28) est formée comme un moyen d'encliquetage au moyen duquel l'élément de réglage (28) peut être fixé sans outil à la portion de fixation (34) de l'arbre (16) dans au moins deux positions différentes.

2. Soupape de robinet à levier selon la revendication 1, **caractérisée en ce que** les butées (36) comprennent chacune une surface de butée (38; 38.1, 38.2, 38.3, 38.4) inclinée d'un angle d'inclinaison (α) par rapport à l'axe principal (32) de l'élément de réglage (28), dans laquelle les angles d'inclinaison (α) des surfaces de butée (38; 38.1, 38.2, 38.3, 38.4) sont différents les uns des autres.

3. Soupape de robinet à levier selon la revendication 1 ou 2, **caractérisée en ce que**, lorsque l'élément de réglage (28) est positionné par rapport à l'arbre (16) ou au corps principal (14), l'étage de limitation de débit peut être changé en faisant tourner l'élément de réglage (28).

4. Soupape de robinet à levier selon l'une des revendications 1 à 3, **caractérisée en ce que** le corps de base (40) est sensiblement en forme de U ou en forme d'anneau.

5. Soupape de robinet à levier selon l'une des revendications 1 à 4, **caractérisée en ce que** la structure de positionnement (30) comprend une ouverture de positionnement (48) formée dans la portion circonférentielle (46) configurée pour recevoir une portion de l'arbre (16).

6. Soupape de robinet à levier selon l'une des revendications 1 à 5, **caractérisée en ce que** la portion circonférentielle (46) comprend une surface circonférentielle extérieure (52) au niveau de laquelle des structures de fonctionnement (54) sont formées au moyen desquelles, lorsque l'élément de réglage (28) est positionné par rapport à l'arbre (16) ou au corps principal (14), l'étage de limitation de débit peut être changé.

7. Soupape de robinet à levier selon l'une des revendications 1 à 6, **caractérisée en ce que** l'élément de réglage (28) comprend des marqueurs (56) indiquant, lorsque l'élément de réglage (28) est positionné par rapport à l'arbre (16) ou au corps principal (14), l'étage de limitation de débit respectif.

8. Soupape de robinet à levier selon la revendication 7, **caractérisée en ce qu'**au moins une partie des marqueurs (56) est formée par les structures de fonctionnement (54).

9. Soupape de robinet à levier selon l'une des revendications 1 à 8, **caractérisée en ce que** l'élément de réglage (28) est positionné par rapport à l'arbre (16) de telle sorte que les butées (36) pointent vers le corps principal (14).

10. Robinet sanitaire à levier **caractérisé en ce qu'**il comprend une soupape de robinet à levier (10) selon l'une des revendications 1 à 9.
